# FASCICULE DE BREVET EUROPEEN

(11) **EP 0 611 527 B1**
(45) Date de publication et mention de la délivrance du brevet: **28.05.1997**
(21) Numéro de dépôt: 94400321.9
(22) Date de dépôt: 14.02.1994
(51) Int. Cl.: A23G 3/00, A23L 1/236

(54) **Sirop edulcorant à base de maltitol, confiseries fabriquées à l'aide de ce sirop, et utilisation d'un agent de contrôle de la propagation de la cristallisation dans la fabrication de ces produits**
Süsssirup auf Basis von Maltitol, mit Hilfe dieses Sirup hergestellte Konfekte und die Anwendung eines Mittels zur Regulierung des Kristallisationsablaufes bei der Herstellung dieser Produkte
Maltitol based sweetening syrup, confections produced using this syrup and the use of a crystalization propagation controlling agent in the preparation of these products

(30) Priorité: 16.02.1993 FR 9301738; 18.02.1993 FR 9301864
(43) Date de publication de la demande: 24.08.1994
(73) Titulaire: Roquette Frères, F-62136 Lestrem (FR)
(72) Inventeur: Ribadeau-Dumas, Guillaume, F-59130 Lambersart (FR); Fouache, Catherine, F-62113 Sailly Labourse (FR); Serpelloni, Michel, F-62660 Beuvry les Bethune (FR)
(74) Mandataire: Boulinguiez, Didier

(56) Documents cités:
- EP-A- 0 072 080
- EP-A- 0 171 964
- EP-A- 0 185 595
- US-A- 4 528 206

## Description

La présente invention a pour objet l'utilisation, pour contrôler la propagation de la cristallisation du maltitol présent dans une confiserie, de molécules ayant un poids moléculaire supérieur à 1300. Cette utilisation s'applique en particulier à la préparation de sucres cuits et d'articles semi-cristallisés.

L'invention a également pour objet un procédé permettant le contrôle de la propagation de la cristallisation du maltitol contenu dans un sirop édulcorant ou une confiserie, dont en particulier un sucre cuit ou un article semi-cristallisé.

L'invention vise aussi la fabrication et l'utilisation en confiserie d'un sirop édulcorant contenant des molécules de poids moléculaire supérieur à 1300. Elle concerne enfin, en tant que produits nouveaux, les confiseries obtenues de la sorte et le sirop édulcorant précité.

On entend par le terme "sucre-cuit", les produits de confiserie traditionnellement appelés bonbons durs , qu'ils soient fourrés ou non, candis ou non, de texture cassante et vitreuse, obtenus par déshydratation poussée d'un sirop de sucres ou de polyols. Ces produits peuvent ou non contenir des principes actifs pharmaceutiques ou des substances ayant des vertus diététiques.

Par l'expression "articles semi-cristallisés", on désigne les articles de confiserie au sein desquels les sucres ou les polyols employés se présentent dans un état cristallisé et également dans un état amorphe. Cette expression englobe en particulier, sans que la liste ne soit limitative, les chewing-gums, les pâtes à mâcher, les fondants, les caramels, les fudges, les nougats et les couches dragéifiées tendres. Ces articles peuvent contenir également des principes actifs pharmaceutiques ou des substances ayant des propriétés diététiques.

Au sens de la présente invention, un sirop édulcorant ou une confiserie sont qualifiés de "cristallisables" si un sucre cuit contenant de 0,5 à 5,0 % d'eau et préparé à partir dudit sirop ou de la charge édulcorante de ladite confiserie présente l'aptitude à cristalliser et à perdre son aspect vitreux sur au moins une partie de sa surface en raison de l'apparition de microcristaux de maltitol, dans un délai de 30 jours, lorsqu'il est placé à 20°C et à 66 % d'humidité relative. Par charge édulcorante d'une confiserie on entend l'ensemble des hydrates de carbone, éventuellement hydrogénés, entrant dans la fabrication de la confiserie. Ces hydrates de carbone peuvent avoir aussi bien une fonction de charge qu'une fonction édulcorante au sein de la confiserie.

On connaît différents sirops de maltitol utilisés couramment en confiserie dite "sans sucre". Ils présentent tous des défauts majeurs lorsqu'ils sont employés spécifiquement lors de la fabrication de sucres cuits et d'articles de confiserie semi-cristallisés.

Certains d'entre eux, comprenant moins de 60 % de maltitol, peuvent être considérés comme pauvres en maltitol. On peut citer par exemple l'un des sirops les plus connus, commercialisé sous le nom de LYCASIN^{R} 80/55 par la société demanderesse. On peut également mentionner les sirops vendus sous les marque POLYSORB^{R}, HYSTAR^{R} et MALTIDEX^{R} 200.

De façon générale, de tels sirops sont toujours non cristallisables et riches en sorbitol ou en polysaccharides de poids moléculaire supérieur à 1300 Daltons. Ceux-ci sont loin de satisfaire pleinement les confiseurs dans les applications définies ci-dessus, si bien qu'ils tendent à être supplantés par d'autres polyols dits de deuxième génération. On leur reconnaît en effet plusieurs défauts majeurs. Citons en particulier leur forte hygroscopicité, certes variable avec le poids moléculaire moyen du sirop considéré, mais qui se traduit toujours dans le cas des confiseries auxquelles on s'intéresse dans le cadre de la présente invention, par un collage excessif aux papiers d'emballage et une évolution de leur texture au cours du temps.

Un second défaut est lié à leur pouvoir sucrant insuffisant. Il est, d'ordinaire, nécessaire d'améliorer les qualités organoleptiques des confiseries préparées avec de tels sirops en ayant recours aux édulcorants intenses, connus pour être soit instables, soit imparfaits en goût, et en retenant des arômes spécialement mis au point pour la confiserie sans sucre.

Le troisième défaut très fâcheux qui leur est reconnu a trait à leur caractère cariogène, lorsqu'ils contiennent des teneurs élevées en polysaccharides hydrogénés de degré de polymérisation supérieur à 20. Il est couramment admis aujourd'hui que lorsque ces teneurs sont supérieures à 3 %, comme enseigné dans le brevet FR 2 444 080, les sirops de maltitol sont cariogènes. Ceci enlève la possibilité de promouvoir auprès des consommateurs cette caractéristique essentielle et de combattre efficacement la carie dentaire qui selon l'OMS est un véritable fléau, notamment auprès des enfants, gros amateurs de confiseries.

D'autres sirops, à teneur élevée en maltitol, en contiennent de 65 à 77 %. On peut citer en particulier les sirops MALTISORB^{R} 75/75 , MALTIDEX^{R} 100, FINMALT^{R} et MALBIT^{R}. Ces sirops sont le plus souvent non cristallisables. Bien que jugés en général suffisamment sucrés et non cariogènes en raison de leur très faible teneur en polysaccharides hydrogénés de degré de polymérisation supérieur à 20, teneur qui se situe toujours à un niveau inférieur à quelques pourcents, on reproche à ces sirops d'être insuffisamment visqueux. L'utilisation de tels sirops s'accompagne d'une mollesse excessive des masses cuites, de sorte que pour y remédier, il est nécessaire d'employer des cuiseurs et des installations spécialement conçus à cet effet, différents de ceux habituellement rencontrés dans les unités de fabrication de confiserie, et d'un coût élevé à l'achat. Le problème se pose comme on peut le comprendre en termes encore plus cruciaux lors de fabrications en continu.

Un deuxième défaut de ces sirops réside dans leur caractère hygroscopique, plus élevé encore que celui décrit plus haut dans le cas de sirops comprenant moins de 60 % de maltitol.

Une troisième classe de sirops de maltitol a déjà été utilisée notamment par la société RETTIG en FINLANDE, dès 1986, dans la confection de bonbons de sucres cuits commercialisés sous le nom de marque PASTIROL^{R}. Ces sirops, toujours cristallisables, ont également été testés, semble-t-il sans succès, par d'autres sociétés. Il s'agit des mêmes sirops que ceux cités ci-dessus mais enrichis en maltitol par addition de maltitol cristallisé, ou encore des sirops commercialisés sous les noms de marque MALTISORB^{R} 70/86 et MALTIDEX^{R} 080. De telles compositions sont également décrites dans l'exemple 4 du brevet EP 185595 dont la demanderesse est titulaire. On remarquera que ces sirops sont extrêmement pauvres en oligosaccharides et polysaccharides et en contiennent moins de 1 % sur sec.

L'inconvénient principal de ces sirops à très haute teneur en maltitol réside dans le fait qu'ils sont à l'origine d'un grainage très aléatoire des confiseries. Le terme de grainage désigne pour l'homme du métier une cristallisation incontrôlée au cours du temps, qu'il n'est pas possible de stopper à un niveau désiré. Dans le cas des sucres cuits, les produits finaux peuvent, pour un sirop bien déterminé, selon les cas, soit devenir très collants et s'écouler en conservant pour l'essentiel un aspect vitreux, soit au contraire devenir mats et opaques et cristalliser au cours du temps depuis leur surface jusqu'à leur coeur. Ils ressemblent alors à des sucres d'orge qui, comme on le sait, sont très différents des produits recherchés.

Il en est de même en ce qui concerne les confiseries semi-cristallisées. Là encore, on assiste soit à une absence de cristallisation conduisant à une extrême souplesse des produits finaux, occasionnant des difficultés de fabrication difficilement surmontables, soit à un grainage du produit au cours du temps, celui-ci prenant alors une texture sableuse et cassante. Au pire, comme dans le cas des pâtes à mâcher, le produit devient totalement poudreux, sans liaison aucune.

On connaît par ailleurs diverses compositions contenant des teneurs élevées en maltitol. On peut citer :
- celle décrite dans le brevet US 5017400 (ex.3) utilisée pour préparer des bonbons de sucre cuit. Celle-ci contient 10 % de xylitol sur sec. Il n'y est nullement question d'utiliser le xylitol en tant qu'agent de contrôle de la propagation du maltitol. En effet, son emploi se résume à augmenter la saveur sucrée des bonbons. Il faut remarquer par ailleurs que le xylitol, en raison de son poids moléculaire très faible, égal à 152, confère nécessairement aux bonbons une très forte hygroscopicité.
- celle revendiquée dans le brevet EP 171 964, comprenant 60 à 80 % de maltitol, mais également 12 à 14 % de sorbitol. Cette composition est utilisée en raison de ses propriétés humectantes particulières dans la fabrication de certains produits diététiques. De toute évidence, on ne cherche point, là non plus, une cristallisation du maltitol et un contrôle de la propagation de celle-ci, mais au contraire une absence de cristallisation, de façon à obtenir les propriétés humectantes optimales recherchées. On sait en effet que ces propriétés n'existent, tant pour les sucres que pour les polyols, que lorqu'ils sont présents à l'état de soluté, donc non cristallisés.
- celle décrite dans le brevet JP 51-34467, utilisée afin de fabriquer des sucres cuits. Cette composition comprend 30 % d'hydrolysat d'amidon et 5 % de gomme arabique, associés à une composition à base de maltitol. Dans le cas présent, la combinaison hydrolysat d'amidon - gomme arabique est utilisée afin d'améliorer les propriétés rhéologiques des masses cuites de maltitol. La teneur en maltitol de cette composition n'est pas précisée. De plus, comme l'a vérifié la demanderesse, cette combinaison est imparfaite dans la mesure où elle conduit à l'obtention de produits brunâtres et cariogènes en raison de la présence d'un hydrolysat d'amidon non réduit par hydrogénation.
- celle décrite dans le brevet US 4 623 543 (ex.1), utile à la fabrication des bonbons dragéifiés. Ceux-ci comprennent un centre constitué d'un sirop de maltose réduit dénommé "MALTI TOWA" et d'un hydrolysat d'amidon hydrogéné "PO 40". La faiblesse de la teneur en maltitol de cette composition fait qu'elle n'est pas cristallisable et que de fait il n'y a pas lieu de chercher à contrôler la propagation du maltitol dans ces bonbons. Remarquons que la stabilisation des bonbons vis-à-vis de l'humidité est assurée autrement que par une microcristallisation de ce sirop à la surface de ceux-ci, c'est-à-dire par une étape de dragéification toujours difficile à mettre en place industriellement.
- celle décrite dans la demande de brevet JP 61 254 148, employée dans le but de préparer des confiseries à caloricité réduite. Ces dernières renferment, en tant qu'édulcorant massique, 100 parties d'un sucre alcool pouvant être le maltitol, et 40 à 10 000 parties de polydextrose. En fait, ce dernier est utilisé en raison de sa caloricité réduite. Cette composition ne peut contenir au maximum que 71 % de maltitol. L'inconvénient majeur de cette composition réside dans le fait qu'elle est cariogène et qu'elle se colore lors d'une cuisson en raison de la présence de molécules de glucose libre dans le polydextrose.
- celle décrite dans le brevet EP 94 292, dont la demanderesse est titulaire, utile à la fabrication de bonbons et contenant de 1 à 8 % de gomme arabique ou 0.2 à 2 % de carboxyméthylcellulose en association à un hydrolysat d'amidon hydrogéné contenant moins de 80 % de maltitol et 0,1 à 19 % de sorbitol. Ces produits sont ajoutés en réalité uniquement à des sirops contenant moins de 55 % de maltitol et éventuellement de mannitol, dans le but de réduire le fluage des bonbons. Il n'est nullement question dans ce brevet de contrôler la cristallisation du maltitol et d'éviter un quelconque grainage des confiseries dû à cette molécule. De plus, la pratique a permis de constater que la gomme arabique et la carboxylméthylcellulose présentent les défauts d'induire une coloration brune ou verte gênante pour certains types de bonbons, d'altérer les qualités gustatives de ceux-ci, et de rendre la masse cuite trop élastique et son formage mal aisé.
- celle décrite dans le brevet JP 50 30703, décrivant un procédé de fabrication de bonbons non collants aux dents. Cette composition comporte un agent organique hydrophile de poids moléculaire supérieur à 5000, choisi parmi un groupe de produits extrêmement variés. Cet agent est incorporé à hauteur de 0.001 à 20 % par rapport au poids sec de maltitol. Le sirop de maltose réduit employé est en fait le sirop commercialisé sous la marque "MALBIT^{R} LIQUIDE", connu pour ne contenir que de 73 % et 77 % de maltitol, comme rappelé par I. FABRY dans "MALBIT^{R} and its applications in food industry" in "Development in Sweeteners" vol. 3, 1987, p. 86. Il faut noter qu'à aucun moment n'est indiqué dans ce document l'intérêt de retenir un agent hydrophile, restant de préférence incolore à la cuisson et non cariogène, pour contrôler la propagation de la cristallisation du maltitol.

C'est après avoir identifié et analysé les défauts des compositions et des sirops de maltitol de l'art antérieur, à la lumière des problèmes rencontrés par les confiseurs, que la demanderesse s'est aperçue que l'on recherchait toujours à l'heure actuelle un agent efficace pour contrôler la propagation de la cristallisation du maltitol dans les confiseries précitées, susceptible d'être directement utilisable, sans le moindre inconvénient, dans la fabrication d'un sirop de maltitol particulier pour confiserie. Celui-ci permettrait de préparer des confiseries présentant les caractéristiques avantageuses, toujours apparues comme inconciliables, d'être simultanément :
- fortement sucrées en raison de la très forte teneur en maltitol du sirop,
- très faiblement hygroscopiques,
- non cariogènes,
- et de haute qualité et de grande stabilité.

Elle s'est aperçue, contre toute attente, que l'on pouvait en premier lieu s'affranchir de l'emploi systématique et désavantageux d'édulcorants intenses et de l'utilisation d'emballages spéciaux imperméables à l'eau lors de la fabrication des produits de confiserie qui, en outre, présentent l'avantage d'être non-cariogènes, et d'avoir une texture et un aspect stables au cours du temps ; et que l'on pouvait en second lieu réduire notablement les coûts globaux de fabrication de ces confiseries en comparaison avec les sirops conventionnels ayant des richesses en maltitol comparables, en ayant recours à un sirop édulcorant cristallisable en maltitol (au sens défini précédemment), présentant un spectre de composition bimodal, et comprenant plus de 3 % sur matière sèche de molécules ayant un poids moléculaire supérieur à 1300 Daltons.

De préférence, ce sirop édulcorant contient :
- de 78 à 95 % de maltitol,
- moins de 5 % de monosaccharides hydrogénés de poids moléculaire inférieur ou égal à 182 Daltons,
- de 3 à 19 % de molécules ayant un poids moléculaire supérieur à 1300 Daltons, utilisées en tant qu'agent de contrôle de la propagation de la cristallisation du maltitol.

De préférence, la teneur en maltitol dudit sirop édulcorant est comprise entre 80 et 95 %.

La présente invention concerne donc également l'utilisation d'un sirop édulcorant présentant les caractéristiques définies ci-dessus et comprenant, par rapport à sa matière sèche, de 78 à 95 %, et de préférence de 80 à 95 %, de maltitol, moins de 5 % de monosaccharides hydrogénés de poids moléculaire inférieur ou égal à 182, et de 3 à 19 % de molécules ayant un poids moléculaire supérieur à 1300 Daltons.

Il n'était pas évident qu'un tel sirop puisse présenter l'ensemble des qualités requises pour façonner des sucres cuits ou des articles de confiserie semi-cristallisés, c'est-à-dire qui soient à la fois faciles à produire, stables, non cariogènes et de qualités organoleptiques excellentes.

La demanderesse s'est, en premier lieu, rendu compte que, de façon surprenante et inattendue, bien que le maltitol ait énormément de similitudes avec le sucre du point de vue des propriétés organoleptiques, physico-chimiques et fonctionnelles et que les comportements de ces deux produits en confiserie soient généralement considérés comme très voisins (on se référera par exemple à l'ouvrage édité par T. H. GRENBY, "Developments in sweeteners - 2", Applied Science Publishers LTD 1983, page 73, et à la communication de T. Oda "Structure et applications du maltitol" in Dempum Kagaku, 1972, vol. 19, n° 3, p. 139 à 150), il existe une propriété basique très différente entre les deux molécules : celle liée à leurs cinétiques de propagation de cristallisation. En d'autres termes, elle s'est aperçue que dans le cas du maltitol, lorsqu'une cristallisation est induite par des nuclei, la cinétique de cristallisation est toujours difficile à contrôler, contrairement à celle du sucre. C'est à dire que cette cinétique est, ou bien trop forte, ou bien trop lente, ce qui génère d'énormes difficultés lors de la fabrication des confiseries, ainsi que des problèmes de stabilité de celles-ci au cours du temps.

La demanderesse a donc trouvé un moyen très efficace pour parvenir à contrôler la propagation de la cristallisation du maltitol et a mis au point un procédé de contrôle de la propagation de la cristallisation du maltitol contenu dans un sirop édulcorant cristallisable ou une confiserie comme en particulier un sucre cuit ou un article semi-cristallisé. La demanderesse a constaté que si toutes les molécules autres que le maltitol peuvent être considérées comme de bons anti-cristallisants du maltitol, il n'en demeure pas moins vrai que toutes ces molécules ne permettent pas un contrôle réel de la propagation de la cristallisation du maltitol. Elle a constaté en effet que les meilleurs agents de contrôle de cette propagation ne sont pas les molécules habituellement présentes dans les sirops de maltitol, à savoir le sorbitol, le maltotriitol et les oligosaccharides hydrogénés de faible poids moléculaire. Ces molécules s'avèrent être uniquement des bons inhibiteurs de cristallisation lorsqu'elles sont présentes à haute concentration, ou bien de simples retardateurs de cristallisation à plus faible concentration dans la mesure où elles retardent alors uniquement dans le temps le moment d'apparition de cristaux de maltitol, si bien que le problème décrit plus haut ne peut être résolu par l'emploi de telles molécules. Conformément à l'invention, il a été trouvé que des molécules de poids moléculaire nettement plus élevé, supérieur à 1300, de préférence supérieur à 2000, et plus préférentiellement supérieur à 3000 daltons, se révèlaient être des agents idéaux de contrôle de la cristallisation du maltitol en confiserie. Ces molécules sont toujours absentes, ou sont présentes uniquement à l'état de traces, dans les sirops à haute teneur en maltitol commercialisés jusqu'à ce jour, en raison de leurs modes de fabrication.

La Demanderesse a en outre découvert que lesdites molécules peuvent être choisies parmi les polysaccharides obtenus par hydrolyse d'amidon, de fécule ou de dextrine, ou parmi les produits composés majoritairement de liaisons 1-6 obtenus par condensation ou réarrangement à partir de glucose ou d'un ou plusieurs sucres éventuellement réduits, sous l'action combinée de la chaleur et d'acides dans un milieu presque anhydre. Ces derniers produits, que l'on nommera par la suite, "polyglucose", ont été décrits de nombreuses fois dans la littérature, et en particulier dans les brevets US 2 436 967, US 2 719 179, EP 380 248, US 3 766 165, US 4 965 354, EP 473 333, US 5 091 015, US 5 051 500, JP 01-12761, JP 02-163101, WO 92/12179, WO 92/14761, EP 561 090, En particulier, les produits commercialisés sous le nom générique de polydextrose peuvent être employés pour atteindre le but fixé.

Partant de ce constat surprenant, la demanderesse a mis au point les nouveaux sirops édulcorants conformes à l'invention décrits précédemment, qui sont particulièrement bien adaptés à la fabrication de confiseries comme les sucres cuits et les articles semi-cristallisés.

La Demanderesse a pour cela vérifié qu'en deçà de 80-81 % de maltitol, les sucres cuits obtenus avec les sirops de maltitol du commerce sont toujours fortement hygroscopiques et collants à la manière de ceux préparés avec moins de 45 % de saccharose. Ceci est dû à une absence de microcristallisation de surface. En revanche, au delà de 82-83 % de maltitol, les sucres cuits légèrement collants au départ ont tendance à acquérir, après quelques jours à température ambiante, une surface sèche et non collante, à la manière des sucres cuits ordinaires contenant 50 à 60 % de saccharose. Par la suite, au cours du temps, ces bonbons au maltitol, lorsqu'ils sont préparés à partir de sirops de l'art antérieur comme par exemple le sirop MALTISORB^{R} 70/86, présentent une fâcheuse tendance à s'opacifier rapidement et à grainer, contrairement aux sucres cuits témoins. On peut noter à ce stade de la présentation du problème qu'il est surprenant de constater que le maltitol cristallise à partir d'un verre à un niveau de saturation très nettement supérieur à celui du saccharose, bien que la solubilité du maltitol soit inférieure à température ambiante à celle du sucre. En toute logique, l'inverse était attendu.

A la lumière des essais, il apparaît clairement et de façon non prévisible que les cinétiques de propagation de cristallisation de ces deux molécules sont très différentes.

La société demanderesse a par la suite démontré que c'est uniquement par l'utilisation d'un agent de contrôle de propagation de la cristallisation du maltitol comme défini plus haut, que l'on peut empêcher le grainage et obtenir des produits de confiserie d'une stabilité proche de celle des produits témoins. D'ailleurs, un tel niveau de stabilité peut être obtenu, de façon surprenante, avec une concentration en maltitol plus faible que d'ordinaire, c'est-à-dire avec moins de 80-81 % de maltitol.

Ceci dit, lorsque l'on augmente la teneur en maltitol de ces bonbons jusqu'à dépasser 95 % de sa matière sèche, le contrôle de la propagation de la cristallisation du maltitol devient très difficile en raison du fait que l'agent ne peut plus alors représenter, au maximum, que le complément à 100 %, soit 5 %. Sa concentration est alors trop faible par rapport à la quantité de maltitol présent. Outre le risque de grainage accru, ces bonbons sont fragiles et cassants, ce qui rend difficile leur papillotage.

L'invention concerne ainsi, en particulier, l'utilisation d'un sirop édulcorant cristallisable présentant un spectre de composition bimodal, et comportant plus de 3 % de molécules ayant un poids moléculaire supérieur à 1300 Daltons, celles-ci constituant un agent ou un moyen de contrôle de la propagation de la cristallisation du maltitol.

Selon une première caractéristique essentielle de l'invention, ce sirop est cristallisable, c'est-à-dire qu'il permet d'obtenir, comme indiqué précédemment, des sucres cuits présentant une aptitude à cristalliser et à perdre leur aspect vitreux sur au moins une partie de leur surface lorsqu'ils sont placés dans des conditions rigoureusement définies.

Selon une seconde caractéristique essentielle de l'invention, ce sirop édulcorant présente un spectre de composition bimodal. Cette caractéristique peut être vérifiée par chromatographie liquide haute pression (ci-après désignée HPLC). Ainsi, il est suffisamment riche en maltitol pour être cristallisable, et suffisamment riche en molécules de poids moléculaire supérieur à 1300 pour que la propagation de la cristallisation du maltitol soit contrôlée. En revanche, le sirop édulcorant conforme à l'invention est relativement pauvre en maltotriitol et en oligosaccharides de faible poids moléculaire si on le compare aux sirops de maltitol du commerce.

Ainsi , sa teneur en oligosaccharides ayant un poids moléculaire intermédiaire entre celui du maltitol et celui de l'agent de contrôle de la propagation de la cristallisation du maltitol -c'est-à-dire un poids moléculaire compris entre 344 et 1300 Daltons- est d'ordinaire comprise entre 0,1 et 15%, de préférence compris entre 1 et 12 %, et plus préférentiellement encore compris entre 2 et 9 %, les pourcentages étant exprimés en sec par rapport à la matière sèche du sirop édulcorant.

Parmi ces oligosaccharides, la teneur en maltotriitol ou en molécules de poids moléculaire voisin de celui du maltotriitol est de préférence comprise entre 0,1 et 14 %, plus préférentiellement comprise entre 4 et 9%. Rapportée à la quantité, exprimée en sec, de maltitol présent dans le sirop édulcorant conforme à l'invention, cette teneur est d'ordinaire inférieure à 16 % et de préférence comprise entre 5 et 12 %.

Selon une caractéristique préférentielle de l'invention, le sirop édulcorant, qui peut être ou non préparé extemporanément, contient de préférence moins de 5 %, et plus préférentiellement encore moins de 3 % de molécules présentant un poids moléculaire inférieur ou égal à 182, l'idéal étant qu'il en contienne moins de 2 %. La Demanderesse a en effet constaté que lorsque cette teneur venait à être augmentée de quelques pourcents à partir de cette valeur préférée, par exemple par addition de sorbitol ou de xylitol, il convenait alors d'augmenter environ de 5 à 10°C les températures de cuisson afin de retrouver une plasticité des masses cuites proches de celle du sirop idéal de l'invention, ce qui est contraire à l'un des buts recherchés.

Selon une troisième caractéristique essentielle de l'invention, ce sirop édulcorant contient plus de 3 %, de préférence de 5 à 19 %, et plus préférentiellement encore de 7 à 19 % de molécules ayant un poids moléculaire supérieur à 1300, de préférence supérieur à 2000, et plus préférentiellement supérieur à 3000 Daltons, lesdites molécules jouant le rôle d'agent de contrôle de la propagation de la microcristallisation du maltitol.

Selon une caractéristique préférée de l'invention, ce sirop édulcorant présente une très haute stabilité à la cuisson. De préférence, il reste incolore après cuisson à 170°C dans un test appelé "Candy test" décrit ci-après. Ceci exclut l'emploi en tant qu'agent préféré de contrôle de la propagation de la cristallisation du maltitol de substances instables à la chaleur, contenant par exemple des sucres réducteurs ou des protéines, comme en particulier les gommes naturelles extraites de plantes et de graines, les polymères de fructose et les celluloses.

L'agent de contrôle de la propagation de la cristallisation ayant un poids moléculaire supérieur à 1300 Daltons peut être choisi avantageusement parmi les polysaccharides hydrogénés obtenus à partir d'amidons natifs ou modifiés. Ils peuvent être linéaires ou ramifiés, selon qu'ils proviennent d'un amidon riche en amylose ou riche en amylopectine.

Dans ce cas, il a été constaté que, lorsque les teneurs en maltitol sont comprises entre 78 % et 95 %, et de préférence entre 80 et 95 %, par rapport à la matière sèche, il était possible de préparer un sirop, et donc des confiseries, contenant plus de 3 % de polysaccharides de degré de polymérisation supérieur à 20 sans qu'il soit cariogène, contrairement à ce que laissaient supposer les indications contenues dans le brevet FR 2 444 080. Ceci semble lié au fait que les teneurs en maltitol des sirops de la présente invention sont très nettement supérieures à celles des sirops revendiqués dans ce brevet, celles-ci étant comprises entre 45 % à 60 %.

Il est possible par ailleurs que ce phénomène trouve également son origine dans le fait que la répartition du spectre de composition des sirops utilisés dans l'invention soit bimodale et non pas sensiblement unimodale comme celle des sirops de l'art antérieur. Il faut noter que l'hydrolyse poussée d'amidon par emploi de β-amylase, d'α-amylase et d'isoamylase, comme pratiquée actuellement, permet d'obtenir des sirops pour ainsi dire dépourvus de polysaccharides de haut poids moléculaire, et donc de spectre toujours unimodal.

Les molécules utilisées conformément à l'invention pour contrôler la propagation de la cristallisation du maltitol peuvent également être choisies très avantageusement parmi les polysaccharides, hydrogénés ou non, issus de l'hydrolyse d'une dextrine. Pour la définition du mot "dextrine", on pourra au besoin se référer à la norme ISO 1227 de 1979. Il est clair que ces polysaccharides peuvent être sélectionnés ou fractionnés, par exemple par utilisation de systèmes chromatographiques continus.

Dans la mesure où leur poids moléculaire est effectivement supérieur à 1300 Daltons, les polyglucoses conviennent également particulièrement bien. Ils sont de préférence hydrogénés et éventuellement chromatographiés.

Il convient de noter à ce stade de la présentation de l'invention qu'il n'est pas nécessaire pour obtenir le résultat recherché, à savoir le contrôle de la propagation de la cristallisation du maltitol, d'avoir recours nécessairement à des molécules de nature polysaccharidique considérées habituellement comme étant des "fibres", c'est-à-dire considérées comme étant en grande partie non hydrolysables sous l'action d'enzymes comme l'amyloglucosidase.

En effet, comme cela a été signalé plus haut, les polysaccharides hydrogénés obtenus à partir d'amidon natif, tout comme les polydextroses du commerce, se sont révélés être de très bons agents de contrôle de la propagation de la cristallisation du maltitol, sans pour autant être des "fibres" au sens de la méthode décrite dans "J. Assoc. Off. Anal. Chem." Vol. 68, n° 2, 1985, p. 399. Il est facile de démontrer que les deux types de produits cités ci-dessus contiennent respectivement moins de 0,5 % et 5 % de fibres selon le protocole standardisé Sigma N° TD FAD (6.91) dérivé directement de cette méthode.

Par ailleurs, les molécules utilisées conformément à l'invention pour contrôler la propagation de la cristallisation du maltitol sont nécessairement largement solubles dans l'eau, de façon à ce qu'elles ne confèrent pas aux confiseries dans lesquelles elles sont utilisées un caractère râpeux ou fibreux, désagréable en bouche.

Une autre caractéristique préférentielle du sirop édulcorant utilisé conformément à l'invention réside dans sa non-cariogénicité, c'est-à-dire dans sa propriété de ne provoquer qu'une très faible acidification en bouche, contrairement aux sucres conventionnels classiques tels que le glucose, le fructose, le saccharose ou encore les sirops de glucose. Pour obtenir un tel résultat, il convient que le sirop soit exempt de monosaccharides ou de disaccharides tels que, en particulier, le glucose, le maltose, le fructose, le saccharose, le lactose et le xylose. De plus, il est clair qu'il est impératif d'adapter la teneur en agent de contrôle de la propagation de la cristallisation du maltitol selon que l'on emploie des polysaccharides hydrogénés provenant de fécule ou d'amidon hydrolysé, de polysaccharides hydrogénés ou non issus de l'hydrolyse d'une dextrine, ou encore des polyglucoses éventuellement hydrogénés. De préférence, cette teneur en agent de contrôle sera la plus proche possible par défaut de la concentration limite de cariogénicité. Cette valeur est variable d'un agent de contrôle à un autre. Pour déterminer cette valeur et pour contrôler le caractère non cariogène du sirop de maltitol de l'invention, on utilise le test décrit ci-après, reposant sur la détermination in vitro de l'acidification d'une quantité donnée de matière après ensemencement du milieu par la salive provenant de plusieurs donneurs, comparativement à un bouillon de culture témoin ne contenant aucun glucide. Il s'agit d'apprécier une chute de pH au cours du temps du produit à tester, comparativement à un témoin. Il faut souligner que ce test n'est pas suffisant pour caractériser de façon absolue à lui seul la non-cariogénicité d'un produit car les résultats peuvent varier suivant la qualité de la salive utilisée. Il convient de le compléter par des mesures in vivo comme celles couramment pratiquées par le Dr IMFELD de l'université de Zurich en SUISSE . Ce test permet néanmoins de façon très simple et à un coût très modéré de mener des comparaisons valables entre différents produits.

Le mode opératoire détaillé de ce test est le suivant.

On prépare une série de tubes contenant 10 ml d'un milieu de culture nutritif (milieu trypticase à 2 % de matières sèches) sans sucre à pH 7, et on stérilise ces tubes par passage à l'autoclave à 120°C durant 20 minutes.

Dans une première série de cinq tubes, on introduit 1 ml d'eau stérile pour faire une série témoin.

Dans une deuxième série de cinq tubes, on introduit 1 ml d'une solution à 18 % (P/V) du produit à tester.

Puis on ensemence les cinq tubes de chaque série avec un même volume de 0.2 ml par tube d'une dilution de salive humaine obtenue par prélèvement sur cinq donneurs.

On suit alors la formation d'acides par mesure du pH, une première mesure étant effectuée avant incubation et les autres mesures étant effectuées après des incubations à 30°C de respectivement 3, 6, 13, 18 et 21 heures.

Pour qu'un produit puisse être considéré comme non cariogène au sens de ce test B, il faut que la différence de pH observée entre le témoin au bout de 21 heures et le produit à tester au bout de 21 heures, ne soit pas trop prononcée et, dans la pratique, au plus égale à 1 unité de pH.

En ce qui concerne la préparation des sirops de maltitol conformes à l'invention, on peut procéder, sans que cela soit limitatif, selon l'une des méthodes décrites ci-après :
- au mélange dans les proportions correctes d'un sirop à haute teneur en maltose et de l'un au moins des agents de contrôle définis ci-dessus, puis à l'hydrogénation de ce mélange, à sa purification de manière connue en soi, et à sa concentration.
- à la préparation d'un sirop à haute teneur en maltose particulier, riche en polysaccharides ayant un poids moléculaire supérieur à 1300 Daltons, en procédant à une préhydrolyse acide ou enzymatique très faible d'une fécule ou d'un amidon et à une hydrolyse par une β-amylase, en évitant l'emploi d'autres enzymes comme en particulier une isoamylase ou une pullulanase, puis à l'hydrogénation du sirop obtenu, à sa purification et à sa concentration. Dans ce cas, il est préférable de procéder soit avant hydrogénation à l'addition d'un sirop classique à haute teneur en maltose, ou soit après hydrogénation, à l'addition de maltitol de façon à obtenir finalement la quantité voulue en maltitol.
- ou à la concentration d'un mélange, dans les proportions correctes, d'un sirop à très haute teneur en maltitol obtenu par exemple selon le brevet EP 185 595 dont la demanderesse est titulaire, ou encore de maltitol pulvérulent, partiellement ou totalement cristallin, et de l'un au moins des agents de contrôle, éventuellement hydrogénés et/ou fractionnés par chromatographie, mentionnés plus haut.

Il est à noter que cette dernière méthode peut convenir également pour la fabrication des confiseries conformes à l'invention.

En ce qui concerne la concentration en eau du sirop édulcorant utilisé selon l'invention, on choisit de préférence une matière sèche telle que le sirop soit sursaturé en maltitol et que ce dernier soit présent dans un état amorphe. En général, elle est supérieure à 60 %, de préférence supérieure à 65 %, et plus préférentiellement voisine de 70 %.

De plus, comme il a été dit plus haut, ce sirop édulcorant reste de préférence incolore après une cuisson à 170°C dans un test appelé "Candy test" décrit ci-après.

Ce test consiste à porter à 170°C un échantillon de 260 g du sirop à tester, placé dans un récipient de cuisson en cuivre, sur une plaque électrique, puis à façonner la masse cuite de manière à obtenir des sucres cuits. La coloration de ces sucres cuits est évaluée en utilisant un colorimètre Helige muni de disques couleur. Les valeurs obtenues selon ce test sont d'ordinaire comprises entre 3 et 20 unités HBC. Le sirop édulcorant conforme à l'invention est incolore lorsque le résultat obtenu dans ces conditions est estimé inférieur à 3 unités HBC.

Les confiseries préparées à partir du sirop édulcorant, conforme à l'invention en contiennent avantageusement de 2 à 99 %, selon la nature de ces confiseries.

Par exemple, les chewing-gums peuvent être préparés avec seulement 2 à 20 % de ce sirop, alors que les sucres cuits peuvent être fabriqués presque exclusivement avec celui-ci.

En ce qui concerne en particulier la fabrication de sucres cuits, on peut par exemple :
- concentrer, jusqu'à plus de 95 % de matières sèches un sirop édulcorant conforme à l'invention, ou une composition le contenant, et procéder ensuite aux étapes ordinaires d'aromatisation et de façonnage par coulage ou formage.
- concentrer séparément d'une part un sirop édulcorant conforme à l'invention ou une composition le contenant, et d'autre part un sirop comprenant jusqu'à 100 % par rapport à sa matière sèche d'un produit sucrant facilement cristallisable sous une forme peu hygroscopique, tel que l'isomaltulose, l'isomaltulose hydrogéné ou isomalt, le mannitol, l'érythritol ou leurs mélanges, procéder ensuite à l'aromatisation des masses cuites puis enfin les mettre en forme, de façon à obtenir des bonbons bi-couches comme indiqué dans la demande de brevet EP 518 770 dont la demanderesse est titulaire. De préférence alors, les bonbons obtenus présenteront une couche externe représentant moins de 50 % du bonbon et contenant le produit sucrant facilement cristallisable sous une forme non hygroscopique et un centre comprenant le sirop édulcorant selon l'invention ou la composition le contenant, sous une forme concentrée.

L'invention pourra être mieux comprise à l'aide des exemples qui suivent.

### Exemple 1

### Préparation de sirops édulcorants utiles à la fabrication de confiseries conformes à l'invention.

Dans une cuve de 25 litres, agitée et thermostatée, on introduit 12 litres d'un sirop composé uniquement d'une dextrine jaune commercialisée par la demanderesse sous le nom de marque TACKIDEX^{R} DF 165. On ajuste le pH à 5.5 et on amène la température du sirop à 55°C. On ajoute 0.015°/°° de β-amylase SPEZYME^{R} DBA, puis après 48 heures de saccharification, 1°/°° d'α-amylase MAXAMYL^{R} HT 3000. On maintient la température voisine de 55°C et on stoppe la saccharification après 88 heures. On purifie ensuite l'hydrolysat obtenu, on le concentre à 40 % de M.S. avant de l'hydrogéner dans des conditions habituelles, de façon à obtenir un taux de sucres réducteurs inférieur à 0,5 %.

La composition obtenue titre alors :
- 4.8 % de sorbitol
- 14,9 % de maltitol
- 56,4 % de polysaccharides de poids moléculaire supérieur à 1300.

On additionne alors à cette composition un sirop très riche en maltitol obtenu exactement comme décrit dans le brevet EP 185 595 et titrant 95 % de maltitol sur sec, de façon à obtenir les trois sirops édulcorants conformes à l'invention ci-dessous. Ceux-ci contiennent respectivement 82, 84 et 86 % de maltitol.

A titre de comparaison, sont données également les compositions de trois sirops de l'art antérieur du commerce, l'un contenant 82 % de maltitol environ, le second 84 % environ et le dernier 86 % de maltitol environ.

| | Sirops selon l'invention | | | Sirops de l'art antérieur | | |
|---|---|---|---|---|---|---|
| Composition de la matière sèche en % (Méthode HPLC) | I82 | I84 | I86 | A82 | A84 | A86 |
| Sorbitol | 1,0 | 0,9 | 0,8 | 2,2 | 4,4 | 6,3 |
| Autres monosaccharides hydrogénés | 0,3 | 0,3 | 0,2 | 0,2 | 0,3 | 0,9 |
| Maltitol | 82,0 | 84,0 | 86,0 | 81,7 | 84,1 | 85,7 |
| Maltotriitol | 1,2 | 1,1 | 1,0 | 10,2 | 8,6 | 5,0 |
| Autres oligosaccharides hydrogénés | 3,6 | 3,1 | 2,7 | 4,6 | 2,6 | 2,1 |
| Polysaccharides hydrogénés de PM supérieur à 1300 | 11,9 | 10,6 | 9,3 | 1,1 | traces | traces |

### EXEMPLE 2

### Comparaison des sirops utilisés dans l'invention avec ceux de l'art antérieur.

On compare les propriétés physicochimiques et organoleptiques des sirops édulcorants I82 et I86 conformes à l'invention à celles des sirops de maltitol A82 et A86 de l'art antérieur.

### . Viscosités BROOKFIELD :

| | | Viscosité des sirops | | | |
|---|---|---|---|---|---|
| Matière sèche des sirops | Température de mesure | I82 | I86 | A82 | A86 |
| 65 % | 20°C | 460 cps | 430 cps | 402 cps | 389 cps |
| 70 % | 20°C | 1460 cps | 1240 cps | 1000 cps | 980 cps |
| 65 % | 30°C | 235 cps | 225 cps | 180 cps | 175 cps |
| 70 % | 30°C | 520 cps | 444 cps | 430 cps | 410 cps |
| 65 % | 40°C | 125 cps | 117 cps | 100 cps | 98 cps |
| 70 % | 40°C | 256 cps | 240 cps | 200 cps | 188 cps |

Les sirops édulcorants selon l'invention présentent des viscosités plus élevées que celles des sirops de l'art antérieur, à même température et même matière sèche.

### . Humidités relatives d'équilibre à 20°C :

| | Humidité relative d'équilibre à 20°C | | | |
|---|---|---|---|---|
| Matière sèche des sirops | I82 | I86 | A82 | A86 |
| 65 % | 85,9 % | 85,5 % | 85,0 % | 84,8 % |
| 70 % | 84,2 % | 84,0 % | 82,5 % | 82,0 % |

A même teneur en maltitol et même matière sèche que les sirops de l'art antérieur, les sirops édulcorants de l'invention possèdent des humidités relatives d'équilibre plus élevées. Les sirops de l'invention sont donc relativement moins hygroscopiques.

### . Stabilité à la cuisson :

On procède à un test appelé "Candy test" consistant en une cuisson dans des conditions bien définies d'un sirop. Ce test est employé de façon courante pour apprécier la stabilité des sirops de glucose.

Ici, la cuisson est réalisée à 170°C comparativement à un produit appelé polydextrose, commercialisé par la Société PFIZER sous le nom de marque LITESSE^{R}. Les sirops I82 et I86 sont très stables, autant que les sirops A82 et A86. Ils restent non colorés, contrairement aux produits LITESSE^{R}.

### . Pouvoir sucrant :

Ces évaluations sont menées à température ambiante comparativement au saccharose en solution à 10 %. Les sirops I82, I86, A82 et A86 ont tous un pouvoir sucrant voisin de 0,80.

### . Test de cariogénéicité :

On procède comme indiqué ci-dessus.

Les sirops I82 et I86, A82 et A86 peuvent être considérés comme non cariogènes.

### EXEMPLE 3

### Utilisation dans la fabrication de sucres cuits.

Les sirops édulcorants employés sont les sirops I82, I86 et A82 présentés dans l'exemple 1. Ils sont utilisés pour préparer des bonbons au sucre cuit. Pour cela, ces trois compositions, d'une matière sèche de 75 %, sont déshydratées par cuisson à feu nu et à pression atmosphérique aux températures de 160, 180 et 200°C.

Des bonbons témoins sont obtenus en procédant, dans les mêmes conditions, à la cuisson :
- d'un mélange à 75 % de matière sèche de sirop de glucose ROCLYS^{R} A3878 S commercialisé par la demanderesse et de saccharose, dans des proportions respectives sur sec de 70 % et de 30 % (sucres cuits appelés S 30).
- d'un mélange à 75 % de matière sèche des deux mêmes produits mais dans des proportions respectives de 45 % et de 55 % (sucres cuits appelés S 55).
- d'un sirop de maltitol MALTISORB^{R} 75/75 contenant 77 % de maltitol (sucres cuits appelés A 77).

### . Points d'ébullition des sirops :

| | Teneur en eau résiduelle en % (Karl Fisher) après cuisson à : | | | |
|---|---|---|---|---|
| | | 160°C | 180°C | 200°C |
| Exemples selon l'invention | Sucres cuits I82 | 2,4 | 1,6 | 1,0 |
| | Sucres cuits I86 | 2,3 | 1,7 | 0,8 |
| Exemples comparatifs | Sucres cuits A77 | 2,3 | 1,3 | 0,9 |
| | Sucres cuits A82 | 2,5 | 1,8 | 1,1 |
| | Sucres cuits S30 | 2,1 | / | / |
| | Sucres cuits S55 | 2,0 | / | / |

### . Hygroscopicités des sucres cuits :

Les sucres cuits sont placés dans une ambiance à 66 % d'humidité relative dans une pièce climatisée à 20°C. Les reprises en eau sont déterminées par pesées au cours du temps. Les résultats obtenus sont consignés dans le tableau ci-dessous

| | | Reprise en eau en % | | | | | |
|---|---|---|---|---|---|---|---|
| | | Après un jour | | | Après six jours | | |
| | | 160°C | 180°C | 200°C | 160°C | 180°C | 200°C |
| Exemples selon l'invention | Sucres cuits I82 | 0,87 | 1,15 | 1,40 | 1,59 | 1,96 | 2,96 |
| | Sucres cuits I86 | 1,17 | 1,09 | 1,11 | 2,26 | 1,80 | 2,17 |
| Exemples comparatifs | Sucres cuits A77 | 1,80 | 1,97 | 2,10 | 7,02 | 8,24 | 8,50 |
| | Sucres cuits A82 | 1,79 | 1,95 | 2,06 | 4,56 | 5,76 | 6,40 |
| | Sucres cuits S30 | 0,92 | / | / | 2,70 | / | / |
| | Sucres cuits S55 | 0,80 | / | / | 1,30 | / | / |

On constate que les sucres cuits conformes à l'invention présentent des comportements voisins de ceux des bonbons de l'art antérieur avec saccharose. Ces comportements diffèrent grandement par contre de ceux des sucres cuits avec maltitol de l'art antérieur qui sont particulièrement hygroscopiques et ont une forte tendance à s'écouler lors de la reprise en eau sans être le siège d'une microcristallisation du maltitol en surface.

### . Tendances au collage et au grainage :

Les sucres cuits papillotés sont conservés à température ordinaire sans sur-emballage. Ils sont observés après 3 mois.

| | | Collage au papier | Grainage |
|---|---|---|---|
| Exemples selon l'invention | Sucres cuits I82 | Non | Non |
| | Sucres cuits I86 | Non | Non, très léger blanchiment de surface |
| Exemples comparatits complets | Sucres cuits A77 | Oui, Très important | Non |
| | Sucres cuits A82 | Non | Oui |
| | Sucres cuits S30 | Oui, important | Non |
| | Sucres cuits S55 | Non | Non |

Là encore, les bonbons obtenus avec les sirops de l'invention se comportent particulièrement bien, et de manière similaire à ceux contenant 55 % de saccharose.

### EXEMPLE 4

### Utilisation dans la fabrication de chewing-gums.

On prépare deux types de chewing-gums comprenant deux charges édulcorantes différentes :
- l'une correspondant à une composition connue et déjà employée à base d'un sirop de maltitol commercialisé par la demanderesse sous la marque LYCASIN^{R} 80/55 et d'une poudre de maltitol cristallisé de haute pureté commercialisée également par la demanderesse sous la marque MALTISORB^{R} P,
- l'autre correspondant à une composition comprenant, dans des proportions identiques, la même poudre de maltitol cristallisé et un sirop S présentant une matière sèche voisine de celle du sirop LYCASIN^{R} 80/55. Ce sirop, apportant les agents, ou molécules, de contrôle de la propagation du maltitol, contient sur sec :
- sorbitol : 2,4 %
- maltitol : 50,1 %
- maltotriitol : 17,7 %
- oligosaccharides de poids moléculaire compris entre 344 et 1300 : 9,5 %
- polysaccharides de poids moléculaire > 1300 : 20,3%

Ainsi, les charges édulcorantes employées comprennent sur matière sèche :

| | **Selon l'art antérieur (en %)** | **Selon l'invention (en %)** |
|---|---|---|
| Sorbitol | 0,4 | 0,4 |
| Maltitol | 92,6 | 92,1 |
| Maltotriitol | 4,0 | 2,7 |
| Autres oligosaccharides PM compris entre 344 et 1300 | 1,3 | 1,3 |
| Polysaccharides de PM > 1300 | 1,3 | 3,1 |
| Glycérine | 0,4 | 0,4 |

| **soit :** | | |
|---|---|---|
| Oligosaccharides ayant un PM compris entre 344 et 1300 | 5,3 | 4,0 |
| Maltotriitol par rapport à la quantité de maltitol en sec/sec | 4,3 | 2,9 |

Ces deux charges édulcorantes sont cristallisables car des sucres cuits préparés à partir de celles-ci, placés à 66 % d'humidité relative et à 20°C, tendent à cristalliser en surface en devenant moins transparents après quelques jours d'exposition dans ces conditions.

A partir de ces charges édulcorantes, on fabrique des chewing-gums selon la formule suivante :

| | |
|---|---|
| - Gomme de base (Dreyco^{R}) | 20,0 % |
| - Charge édulcorante | 75,5 % |
| - Eau (apportée par la charge édulcorante) | 3,9 % |
| - Arôme | 0,8 % |

Pour réaliser la fabrication, on ramollit la gomme de base en la portant à une température d'environ 70°C et on la place dans un pétrin préchauffé à 45-50°C.

On y ajoute le sirop de maltitol LYCASIN^{R} 80/55 ou le sirop S préchauffé à 45°C et on pétrit pendant deux minutes.

On ajoute alors le tiers de la poudre de maltitol cristallisé MALTISORB^{R}P et on pétrit encore durant deux minutes, à la suite de quoi on introduit un nouveau tiers de la poudre de maltitol.

Après deux minutes de pétrissage, on ajoute le reste de la poudre de maltitol, puis l'arôme et la glycérine.

On pétrit encore deux minutes, puis on lamine et découpe la pâte.

On mesure au cours du temps la dureté à 20°C de pièces de chewing-gums de 5 mm d'épaisseur par pénétrométrie, à l'aide d'un appareil de type INSTRON^{R}.

Les résultats sont les suivants :

| **DURETE** | **Chewing-gums comprenant la charge édulcorante de l'art antérieur** | **Chewing-gums comprenant la charge édulcorante selon l'invention** |
|---|---|---|
| **Jour de fabrication J**_{**0**} | **23,6 N** | **20,2 N** |
| **J**_{**0**} **+ 1 jour** | **29,4 N** | **26,5 N** |
| **J**_{**0**} **+ 30 jours** | **32,5 N** | **28,6 N** |

Les chewing-gums préparés en utilisant des agents de contrôle de la propagation de la cristallisation du maltitol, à raison de 3,1 % de la charge édulcorante, présentent donc une texture toujours plus souple que celle des chewing-gums préparés selon l'art antérieur.

De plus, les chewing-gums selon l'invention sont moins cassants, ce qui dénote une moindre propension à la cristallisation de la phase sirupeuse au cours du temps.

Soumis à un panel de dégustateurs spécialisés, le produit selon l'invention est jugé supérieur en raison de sa texture plus tendre à la mastication.

## Revendications

1. Utilisation en tant qu'agent de contrôle de la propagation de la cristallisation de maltitol dans une confiserie de molécules ayant un poids moléculaire supérieur à 1300 Daltons.

2. Utilisation selon la revendication 1 de molécules ayant un poids moléculaire supérieur à 2000, de préférence supérieur à 3000 Daltons.

3. Utilisation selon l'une des revendications 1 ou 2 de molécules choisies dans le groupe constitué par :
- les polysaccharides hydrogénés, linéaires ou ramifiés, obtenus à partir d'amidon natif ou modifié,
- les polysaccharides, hydrogénés ou non, issus de l'hydrolyse d'une dextrine,
- les polyglucoses, de préférence hydrogénés.

4. Utilisation, pour la préparation de confiseries, d'un sirop édulcorant cristallisable en maltitol ayant un spectre HPLC de composition bimodal et présentant plus de 3 % sur matière sèche de molécules ayant un poids moléculaire supérieur à 1300 Daltons.

5. Utilisation selon la revendication 4 d'un sirop édulcorant comprenant, par rapport à sa matière sèche, de 78 % à 95 % de maltitol, moins de 5 % de monosaccharides hydrogénés de poids moléculaire inférieur ou égal à 182 Daltons, et de 3 % à 19 % de molécules ayant un poids moléculaire supérieur à 1300 Daltons.

6. Utilisation selon l'une des revendications 4 et 5, caractérisée en ce que le sirop édulcorant comprend de 80 à 95 % de maltitol.

7. Sirop édulcorant caractérisé en ce qu'il est cristallisable en maltitol, qu'il présente un spectre HPLC de composition bimodal, et qu'il comprend plus de 3 % sur matière sèche de molécules ayant un poids moléculaire supérieur à 1300 Daltons.

8. Sirop édulcorant selon la revendication 7, caractérisé en ce qu'il comprend, par rapport à sa matière sèche, de 78 à 95 %, de préférence de 80 à 95 %, de maltitol, moins de 5 % de monosaccharides hydrogénés de poids moléculaire inférieur ou égal à 182 Daltons et de 3 à 19 % de molécules ayant un poids moléculaire supérieur à 1300 Daltons.

9. Sirop édulcorant selon l'une des revendications 7 et 8, caractérisé en ce qu'il contient de 3 à 19 %, de préférence de 5 à 19 % et plus préférentiellement encore de 7 à 19 %, de molécules ayant un poids moléculaire supérieur à 2000, de préférence supérieur à 3000 Daltons.

10. Confiserie contenant de 2 à 99 % du sirop édulcorant selon l'une quelconque des revendications 7 à 9.

11. Confiserie selon la revendication 10, caractérisée en ce qu'elle est un sucre cuit.

12. Confiserie selon la revendication 10 caractérisée en ce qu'elle est un article semi-cristallisé, notamment un chewing-gum, une pâte à mâcher, un fondant, un fudge, un nougat, une couche dragéifiée tendre.

## Claims

1. Use, as agent for controlling propagation of crystallization of maltitol in a confectionery, of molecules having a molecular weight greater than 1,300 Daltons.

2. Use according to Claim 1, of molecules having a molecular weight greater than 2,000, preferably greater than 3,000 Daltons.

3. Use according to one of Claims 1 or 2 of molecules chosen from the group consisting of :
- linear or branched hydrogenated polysaccharides obtained from native or modified starch,
- polysaccharides, hydrogenated or otherwise, derived from hydrolysis of dextrin,
- polyglucoses preferably hydrogenated.

4. Use, for the preparation of confectioneries, of a sweetening syrup crystallizable to maltitol having a bimodal composition HPLC spectrum and having more than 3%, expressed on a dry matter basis, of molecules having a molecular weight greater than 1,300 Daltons.

5. Use according to Claim 4, of a sweetening syrup comprising, relative to its dry matter content, 78% to 95% maltitol, less than 5% hydrogenated monosaccharides with a molecular weight of less than or equal to 182 Daltons and 3% to 19% of molecules having a molecular weight greater than 1,300 Daltons.

6. Use according to one of Claims 4 and 5, characterized in that the sweetening syrup comprises 80 to 95% maltitol.

7. Sweetening syrup characterized in that it is crystallizable to maltitol, in that it has a bimodal composition HPLC spectrum and in that it comprises more than 3%, expressed on a dry matter basis, of molecules having a molecular weight greater than 1,300 Daltons.

8. Sweetening syrup according to Claim 7, characterized in that it comprises, relative to its dry matter content, 78 to 95%, preferably 80 to 95%, of maltitol, less than 5% of hydrogenated monosaccharides with a molecular weight of less than or equal to 182 Daltons and 3 to 19% of molecules having a molecular weight greater than 1,300 Daltons.

9. Sweetening syrup according to one of Claims 7 and 8, characterized in that it contains 3 to 19%, preferably 5 to 19% and still more preferably 7 to 19% of molecules having a molecular weight greater than 2,000, preferably greater than 3,000 Daltons.

10. Confectionery containing 2 to 99% of sweetening syrup according to any one of Claims 7 to 9.

11. Confectionery according to Claim 10, characterized in that it is a boiled sugar.

12. Confectionery according to Claim 10, characterized in that it is a semicrystallized item, especially a chewing gum, a chewing paste, a fondant, a fudge, a nougat, a soft sugar-coated layer.

## Patentansprüche

1. Verwendung von Molekülen mit einem Molekulargewicht von mehr als 1300 Dalton als Mittel zur Steuerung der Kristallisationsausbreitung von Maltitol in einem Konfekt.

2. Verwendung nach Anspruch 1 von Molekülen mit einem Molekulargewicht von mehr als 2000, bevorzugt von mehr als 3000 Dalton.

3. Verwendung nach einem der Ansprüche 1 oder 2 von Molekülen, ausgewählt aus der Gruppe bestehend aus:
- geradkettigen oder verzweigten, aus natürlicher oder modifizierter Stärke erhaltenen hydrierten Polysacchariden,
- aus der Hydrolyse eines Dextrins stammenden hydrierten oder nicht-hydrierten Polysacchariden,
- Polyglucosen, bevorzugt hydrierten Polyglucosen.

4. Verwendung eines bezüglich Maltitol kristallisierbaren Süßstoffsirups, wobei das HPLC-Spektrum eine bimodale Zusammensetzung aufweist und wobei mehr als 3 % der Trockenmasse Moleküle mit einem Molekulargewicht von mehr als 1300 Dalton darstellen, bei der Herstellung von Konfekten.

5. Verwendung nach Anspruch 4 eines Süßstoffsirups, umfassend bezogen auf seine Trockenmasse 78 % bis 95 % Maltitol, weniger als 5 % hydrierte Monosaccharide mit einem Molekulargewicht von weniger als oder gleich 182 Dalton und 3 % bis 19 % Moleküle mit einem Molekulargewicht von mehr als 1300 Dalton.

6. Verwendung nach einem der Ansprüche 4 und 5, dadurch gekennzeichnet, daß der Süßstoffsirup 80 % bis 95 % Maltitol umfaßt.

7. Süßstoffsirup, dadurch gekennzeichnet, daß er bezüglich Maltitol kristallisierbar ist, ein HPLC-Spektrum bimodaler Zusammensetzung aufweist, und daß er zu mehr als 3 % der Trockenmasse Moleküle mit einem Molekulargewicht von mehr als 1300 Dalton umfaßt.

8. Süßstoffsirup nach Anspruch 7, dadurch gekennzeichnet, daß er bezogen auf seine Trockenmasse 78 % bis 95 %, bevorzugt 80 % bis 95 % Maltitol, weniger als 5 % hydrierte Monosaccharide mit einem Molekulargewicht von weniger als oder gleich 182 Dalton und 3 % bis 19 % Moleküle mit einem Molekulargewicht von mehr als 1300 Dalton umfaßt.

9. Süßstoffsirup nach einem der Ansprüche 7 und 8, dadurch gekennzeichnet, daß er 3 % bis 19 %, bevorzugt 5 % bis 19 % und noch stärker bevorzugt 7 % bis 19 % Moleküle mit einem Molekulargewicht von mehr als 2000, bevorzugt von mehr als 3000 Dalton umfaßt.

10. Konfekt, enthaltend 2 bis 99 % des Süßstoffsirups nach einem der Ansprüche 7 bis 9.

11. Konfekt nach Anspruch 10, dadurch gekennzeichnet, daß es ein Rohzucker ist.

12. Konfekt nach Anspruch 10, dadurch gekennzeichnet, daß es ein semikristallisierter Gegenstand, insbesondere ein Kaugummi, eine Kaumasse, ein Fondant, ein Fudge, ein Nougat, eine weiche Dragéeschicht ist.
